# EUROPEAN PATENT SPECIFICATION

(11) **EP 1 678 965 B1**
(45) Date of publication and mention of the grant of the patent: **28.01.2009**
(21) Application number: 03759128.6
(22) Date of filing: 23.10.2003
(51) Int. Cl.: H04W 74/06

(54) **METHOD AND ARRANGEMENT FOR POLLING MANAGEMENT**
VERFAHREN UND ANORDNUNG ZUR ABFRAGEVERWALTUNG
PROCEDE ET AGENCEMENT DE GESTION DE L'INVITATION A EMETTRE

(43) Date of publication of application: 12.07.2006
(73) Proprietor: TELEFONAKTIEBOLAGET LM ERICSSON (publ), 164 83 Stockholm (SE)
(72) Inventor: BLADSJÖ, David, S-117 30 Stockholm (SE); WESTERBERG, Erik, S-122 38 Enskede (SE)
(74) Representative: Hägglund, Mats O.
(86) International application number: PCT/SE2003/001644
(87) International publication number: WO 2005/041599

(56) References cited:
- EP-A1- 1 331 765
- EP-A1- 1 379 033
- WO-A1-02/09463
- US-A1- 2002 131 372
- US-A1- 2002 167 961
- US-A1- 2003 005 091

## Description

### TECHNICAL FIELD

The present invention relates to packet-based data communications systems in general, specifically to polling of user equipment in such communications system.

### BACKGROUND

Due to an ever increasing demand for wireless access to mobile applications such as web browsing, e-mail, interactive games, voice services and more, a lot of effort is put into making communications systems that can support those applications. One such system is General Packet Radio Service (GPRS), which is a packet-based data bearer service for GSM (Global System for Mobile communications) and TDMA (Time Division Multiple Access) networks.

GPRS integrates a packet-based wireless interface on the existing circuit switched GSM nerwork. Information is transmitted in packets which are reassembled at the receiving side. Radio resources are used only when packets are being sent or received. This allows multiple users to share the available radio resources, in contrast to circuit switched connections in which each mobile data user is assigned a dedicated channel. As a result an efficient use of the radio spectrum is obtained. Further, the packet-based approach of GPRS allows a seamless connection to the Internet from a mobile personal computer.

Many applications that use these networks require relatively high throughput and are characterized by bursty traffic patterns and asymmetrical throughput needs. In addition, much more information is usually flowing to the client device than is being sent from the client device to the server. In order to further increase the data rates on the radio link a method called EDGE (Enhanced Data rates for GSM Evolution) is utilized. This add-on introduces a new modulation technique and a new channel coding that can be used to transmit both packet-switched and circuit-switched voice and data services.

Latency or round-trip time (RTT) is one of the most important system characteristics in GPRS/EDGE systems. The RTT is the time that it takes for a small data packet to traverse the system from the client to the server and back to the client. The RTT is of fundamental importance to the end-user experience and the system performance. The smaller the RTT the less time is spent on application-level signaling and higher-level protocol signaling meaning shorter download times and quicker response times in the interactive applications. Consequently, the lower the latency, the better the performance of the applications such as web browsing, e-mail, interactive games, voice services and more.

In the standard for 3GPP (3^{rd} Generation Partnership Project) release 4 (3GPP R4) [1] the feature "extended UL TBF" (or extended uplink temporary block flow) enables the system to pre-reserve uplink resources i.e. radio channels to the mobile station or user equipment. By doing this the set-up time of radio resources is removed from the RTT. In this way the RTT can be reduced from about 450 ms (prior to 3GPP R4) to below about 200 ms (with Extended ULTBF).

One of the problem with the introduction of the UL TBF and the pre-reservation of radio channels or resources is that in order to maintain the pre-reserved resource, the MS is required to transmit an extensive amount of data. This data transmission is mandatory whether or not the MS has any user data to send or not. This leads to large amounts of transmissions of so called dummy data on the uplink (UL).

This also means that there is a high price to pay in terms of battery time in the mobile station and interference or network capacity for realizing the low latency. To put numbers on this, bringing down the latency from 450 ms to 200 ms risks to reduce the battery time by more than 50 % and increase the UL interference from the GPRS mobile station with more than 100%.

US 2002/0131372 discloses a communication system wherein during data transmission, a remote unit provides a radio access network with an acknowledgment message when polled. The acknowledgment message contains information such as the current window size, the number and identification of frames received in error etc. The polling frequency is based on a channel condition metric.

### SUMMARY

An object of the present invention is accordingly to provide efficient polling management in a packet based data communications system.

Another object is to provide polling functionality in packet-based data communication systems that result in a reduction in latency but not at the expense of increased battery time and/or interference.

These objects are achieved with a method of polling, a polling arrangement, a base station system and a user equipment in accordance with the attached claims 1, 11, 15 and 21, respectively.

Briefly, the present invention comprises a method of polling defined in claim 1 that separates the pre-reservation of a shared uplink resource from presence check polling by providing two different types of polling from the base station system. The first type allows the targeted user equipment to transmit user data packets if the user equipment has any packets available for transmission, otherwise the user equipment can remain silent in response to a poll from the base station system. The second type of polling requires the targeted user equipment to transmit user data packets if any are available or transmit dummy data packets if user data packets are not available in order to signal its presence on the pre-reserved resource on the uplink in response to the issued polling, thereby making it possible to monitor the quality of and to maintain the pre-reserved link/channel.

One additional possibility is to perform the two types of polling on two separated logical channels. Also, the base station system can transmit information that alerts the user equipment as to which type of polling is performed.

The present invention offers the following advantages:
- increased battery time for connected user equipment,
- reduced interference in the communications system.

### BRIEF DESCRIPTION OF THE DRAWINGS

The invention, together with further objects and advantages thereof, may best be understood by making reference to the following description taken together with the accompanying drawings, in which:
Fig. 1 is a schematic illustration of a communications system;
Fig. 2 illustrates a flow diagram over a polling method according to the invention for a base station subsystem,
Fig. 3 illustrates a flow diagram over a polling method according to tha invention for a user equipment,
Fig. 4 illustrates a polling procedure according to an embodiment of the invention,
Fig. 5 is a block diagram of a base station system according to the invention,
Fig. 6 is a block diagram illustrating the polling means of Fig. 2 in more detail,
Fig. 7 is a block diagram of a user equipment according to the invention.

### DETAILED DESCRIPTION

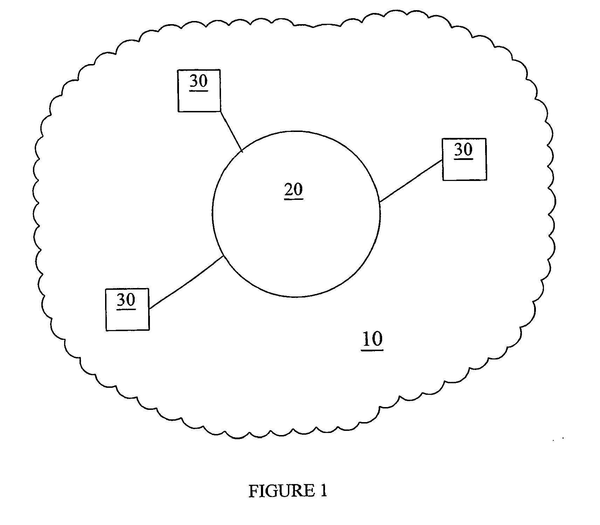

Fig. 1 is a schematic illustration of a general data communications system 10 comprising a plurality of user equipment 30 connected to a base station subsystem 20. The base station subsystem 20, comprises a plurality of base station system nodes such as either a plurality of stand-alone base stations 21 (as in e.g. W-LAN), or a plurality of base stations 21 in combination with additional nodes e.g. a packet control unit PCU and a base station controller BSC (as in e.g. GSM/GPRS/EDGE) or a radio network controller RNC (as in e.g. W-CDMA).

The invention will be discussed in context of a GPRS/EDGE data communication system, it is however implied that the same discussion can be applied to other packet-based radio systems with shared resources such as W-DCMA and W-LAN networks, or EGPRS, GPRS/EDGE, and CDMA2000.

Since the present invention only relates to the actual polling procedure in a communication system, all other functions are assumed to be performed according to common knowledge and are thus not further explained.

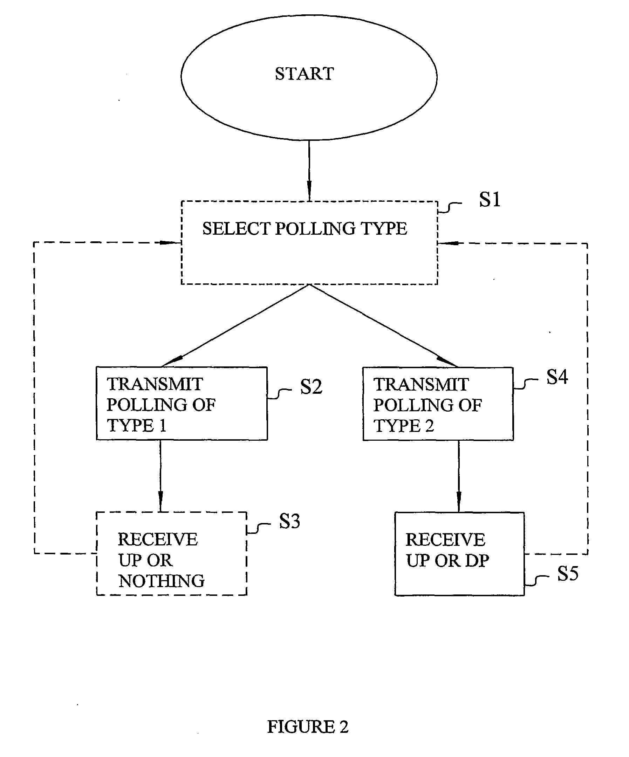

Fig. 2 is a schematic flow diagram of a method in a base station system 20 according to the invention. In step S 1 the base station system 20 determines which type of polling to perform. This is typically achieved by analyzing the radio traffic situation by means of an analyzing unit 23 or by looking up information concerning the various connected user equipment in some optional register and by analyzing earlier transmissions. Then the base station system 20 performs polling according to a first type T1 in step S2 or a complementary second type T2 in step S4, by transmitting type one T1 polling or type two T2 polling to a target user equipment 30.

Alternatively the method according to Fig. 2 can comprise an additional step of performing polling according to at least a third type.

In response to polling according to type one T1 the base station system 20 receives a user data packet UP or nothing in step S3. Depending on the radio traffic situation the base station system 20 assumes that a lack of response is caused by either that the user equipment 30 has nothing to transmit or that the uplink is defective. The first assumption causes the base station system 20 to proceed according to a predetermined polling scheme, whilst the second assumption might cause the base station system 20 to choose to perform polling according to the second type T2 in order to determine if the user equipment 30 is still active or connected.

In response to polling according to the complementary type two T2 the base station system 20 receives a user data packet UP or a so called dummy data packet DP in step S5. If there is no response to the polling of type two T2 the base station assumes that the user equipment 30 has abandoned the connection, voluntary or involuntary, or that a transmitted data packet has been lost during transmission. The base station system 20 can then chose either to retract the pre-reserved radio resource or to perform an additional polling according to type two T2

The transmission of dummy data packets DP can be realized in at least three different ways. Firstly, transmitting real dummy data e.g. a string of zeros in a field for user data. Secondly, transmitting a data packet where a checksum is deliberately wrong, thereby causing the user equipment to determine the data packet to be damaged and moving it to a higher protocol level. Finally, the dummy data packet DP can be realized by re-transmitting an already sent radio block.

If the base station system 20 determines that the radio situation in the system is very noisy i.e. too much interference or that the transmission quality is very poor, it can decide to perform the type two T2 polling more frequently in order to be sure that the user equipment 30 is still connected. If there is very little interference or noise and the transmission quality is excellent the base station system 20 can decide to transmit type two T2 polling less frequently, thus assuming that the user equipment 30 stays connected.

In order to further separate the two polling types T1, T2 the base station system 20 can perform the two methods on two separate logical channels. Alternatively, the polling of type one T1 can comprise polling with an uplink state flag and the polling of type two T2 can comprise polling with a control block.

Also, in order to enable the targeted user equipment 30 to identify the type of polling, the base station system 20 can transmit polling information to the user equipment 30. This information can either be part of the actual polling or be a separated transmission preceding the polling or being managed in standard documents. Possible information is some polling scheme, e.g. identifying how often one of the polling types is expected to be sent, such as every tenth polling will be of type two T2. The polling information can be based on the current radio traffic situation in the system 10. Thereby the base station system 20 can combine the two types of polling in a manner that is optimized for the current radio traffic situation.

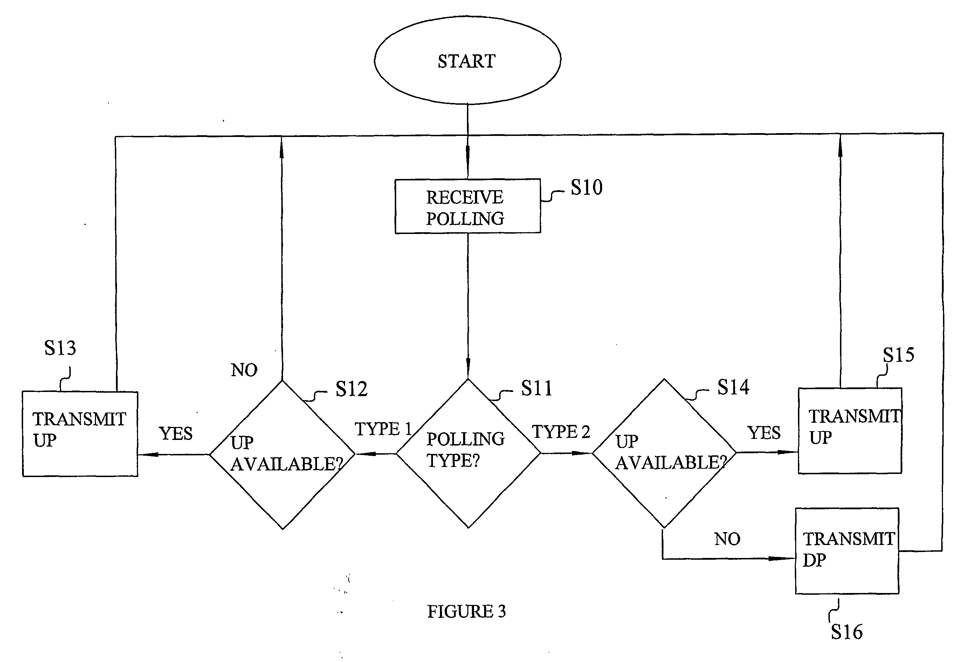

Fig. 3 is a schematic flow diagram illustrating of a method at a user equipment 30 according to the invention. Initially the user equipment 30 receives polling from a base station 21 in a base station subsystem 20 in step S10. Once the user equipment 30 receives the polling it has to identify the polling type in step 11.

If the polling is identified to be of type one T1, then step S12 checks if there are any user data packets UP in a buffer unit 33 awaiting transmission. If so user data packets UP can be transmitted to the base station system 20 in step 13. If the buffer unit 33 is empty, the user equipment 30 typically remains quiet, thus preserving the battery time. However, it may be possible for the user equipment 30 to voluntary transmit dummy data packets DP.

Alternatively the user equipment 30 can be required to transmit available user data packets UP i.e. not a voluntary transmission but a mandatory one. Similarly, that the user equipment is forbidden to send anything else than a user data packet UP in response to a polling of type one T1.

If the polling is identified as type two T2 in step S11, then step S 14 checks if there are any user data packets UP in the buffer unit 33 awaiting transmission. If so such user data packets UP are transmitted to the base station system 20 in step S16. If no user data packet UP is awaiting transmission a so called dummy data packet DP is transmitted to the base station system 20 in step S 17, thus confirming that the user equipment 30 is still connected.

The user data packet UP can contain actual payload data, while the dummy data packet DP can comprise data enabling the base station 21 or base station subsystem 20 to identify the user equipment 30. The dummy data packet DP can also be a retransmission of already transmitted user data.

The frequency at which the two types of polling are utilized varies with the radio traffic situation in the communications system. In order to preserve battery time for connected user equipment 30 it would be most favorable to only perform type one T1 polling, thus enabling the user equipment 30 to only transmit if there are any user data packets UP in the buffer unit 33. Unfortunately this decreases the possibility for the base station subsystem 20 to be sure if the user equipment is connected. It is therefore necessary to regularly perform type two T2 polling in order to check that the user equipment 30 is still present on the pre-reserved resource.

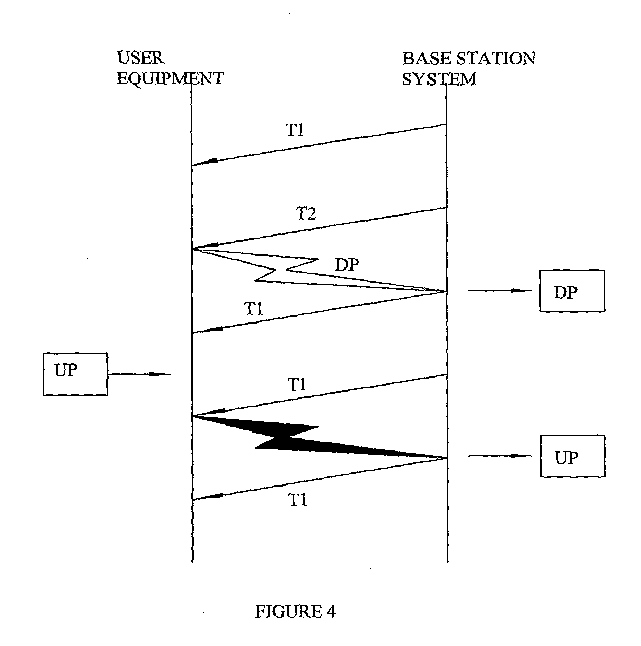

An example of a polling procedure from a base station system 20 to a user equipment 30 is illustrated in Fig 4.

As a first step the base station subsystem performs polling according to type one T1. Since no user data packet is awaiting transmission at the user equipment, no response is transmitted.

After a time the base station system 20 performs polling according to type two T2.

Since there is still no user data packet UP awaiting transmission at the user equipment, the user equipment responds with a dummy data packet DP to the base station system 20.

The base station system 20 then performs two consecutive pollings according to type one T1.

Between those two consecutive pollings a user data packet is received at the user equipment 30 for transmission to the base station 21.

After the second polling of type one T1 the user equipment 30 responds with the user data packet UP to the base station system 20.

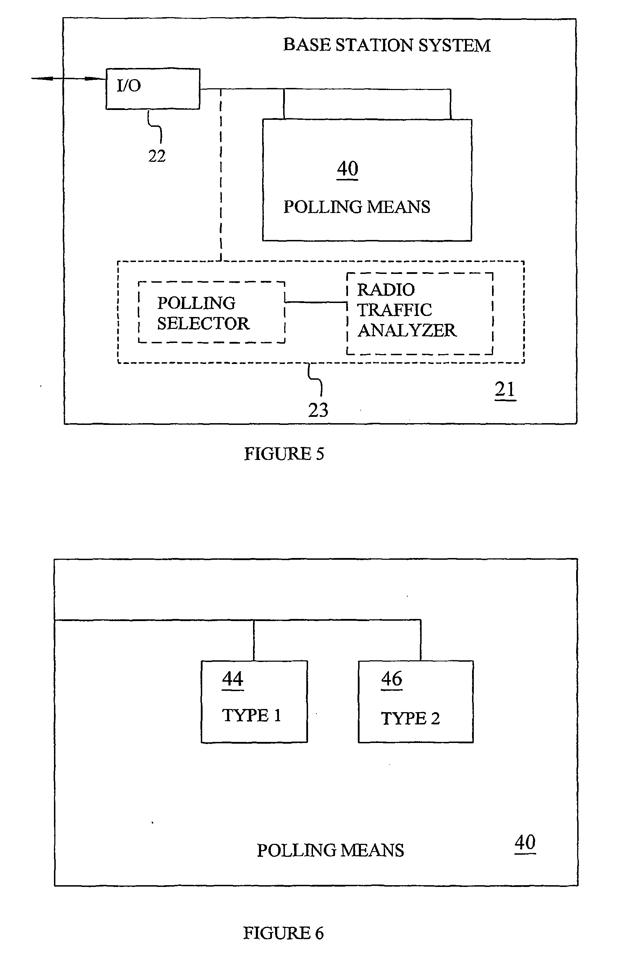

In Fig. 5 an embodiment of a base station system 20 according to the invention is shown. It comprises an input/output unit 22 for transmitting and receiving data, and polling means 40 for performing polling of user equipment 30, and optionally a unit 23 for polling selection and radio traffic analysis. The unit 23 can be a part of an actual base station 21 or optionally be in the polling means 40 or provided elsewhere in the system 20.

An embodiment of the polling means 40 according to the invention is shown in Fig. 6. It comprises first means 44 for performing polling according to a first type T1, and complementary second means 46 for performing polling according to a complementary second type T2. The first type T1 allows the targeted user equipment to transmit on a pre-reserved resource e.g. channel or frequency, if it has any user data packets to transmit. Otherwise the user equipment 30 can remain silent so as to preserve battery time. The second type T2 requires the targeted user equipment 30 to respond, either with a user data packet UP or a so called dummy data packet DP. The dummy data packet DP could in one embodiment contain information that identifies the targeted user equipment 30, thus confirming that the user equipment 30 is still connected. In another embodiment the dummy data packet DP could contain other information.

An alternative embodiment of a base station system 20 can comprise optional means for performing polling according to at least a third type.

The polling arrangement according to Fig. 6 can be optionally adapted to perform the two types of polling T1, T2 on separate logical channels.

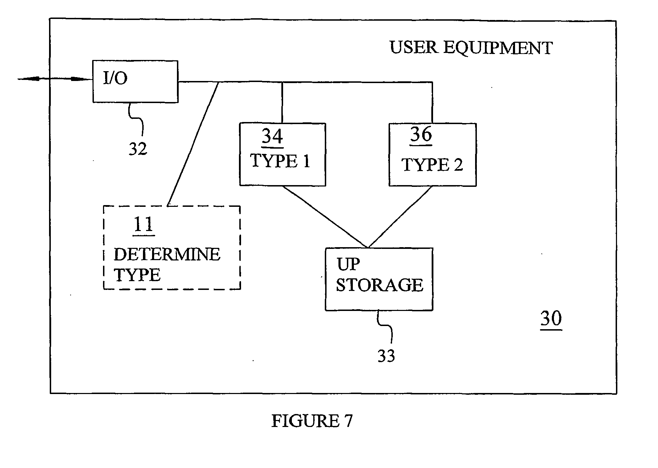

In Fig. 7 an embodiment of a user equipment 30 according to the invention is shown. The user equipment 30 comprises an input/output unit 32 for transmitting and receiving data packets, first response means 34 for receiving and responding to polling according to the first type T1, and complementary second response means 36 for responding to polling according to the second type T2, and optionally identification means 31 for identifying the polling type, and a buffer unit 33 for storing user data packets UP awaiting transmission.

An alternative embodiment of a user equipment 30 can comprise optional means for responding to polling according to at least a third type.

The user equipment 30 according to Fig. 7 can be adapted to receive polling according to type one T1 and type two T2 on two separated logical channels.

It will be understood by those skilled in the art that various modifications and changes may be made to the present invention without departure from the scope thereof, which is defined by the appended claims.

### REFERENCES

[1] 3GPP TS 44.060 V4.13.0 (2003-09)

## Claims

1. A method of polling in a packet-based data communications system (10), said communications system (10) comprising a base station system (20) polling connected user equipment (30), **characterized in that** said polling is performed according to:
a first type of polling (T1) allowing said user equipment (30) to choose whether or not to transmit a user data packet (UP) to the base station system (20) in response to reception of polling of the first type (T1), and
a complementary second type of polling (T2) requiring the user equipment (30) to transmit a user data packet (UP) or a dummy data packet (DP) to the base station system (20) in response to reception of polling of the second type (T2).

2. A method according to claim 1, wherein said base station system (20) performs polling according to the first type (T1) on a first logical channel, and performs polling according to the complementary second type (T2) on a second logical channel.

3. A method according to claim 1 or 2, wherein the base station system (20) transmits polling information to said user equipment (30), said information enabling the user equipment (30) to identify the polling type of the received polling.

4. A method according to claim 3, wherein said polling information from the base station system (20) is based on a current radio traffic situation in the communication system (10).

5. A method according to any of the preceding claims, wherein said first type (T1) comprises polling with an upstate flag and said second type (T2) comprises polling with a control block.

6. A method according to any of the preceding claims, wherein the communications system (10) is selected from at least one of:
a General Packet Radio Service (GPRS) communication system,
an Enhanced GPRS (EGPRS) communication system,
a GPRS/Enhanced Data rates for GSM (Global System for Mobile communications) Evolution (EDGE) communications system,
a Wideband Code Division Multiple Access (W-CDMA) communications system,
a CDMA2000 communications system,
a Wireless Local Area Network (W-LAN) communications system.

7. A method according to any of the preceding claims, wherein said user equipment (30) in response to reception of said polling of the second type (T2) transmits a user data packet (UP) to the base station system (10) if said user data packet (UP) is available for transmission in the user equipment (30), otherwise the user equipment (30) transmits the dummy data packet (DP).

8. A method according to any of the preceding claims, wherein said user data packet (UP) comprises user payload data and said dummy data packet (DP) comprises data enabling the base station system (20) to identify the user equipment (30).

9. A method according to any of the preceding claims, wherein said user equipment (30) in response to reception of said polling of type one (T1) shall send a user data packet (UP) to the base station system (10) if said user data packet (UP) is available for transmission in the user equipment (30).

10. A method according to any of the preceding claims, wherein said user equipment (30) in response to reception of said polling of type one (T1) shall send no data packet, neither user data packet (UP) nor a dummy data packet (DP) to the base station system (20) if said user data packet (UP) is not available for transmission in the user equipment (30).

11. A polling arrangement (40) in a base station system (20) of a packet-based communications system (10), said polling arrangement (40) being adapted to polling of user equipment (30), **characterized in that** said arrangement comprises:
first means (44) for polling according to a first type (T1) allowing the user equipment (30) to choose whether or not to transmit a user data packet (UP) in response to reception of the polling, and
complementary second means (46) for polling according to a second type (T2), requiring the user equipment (30) to transmit the user data packet (UP) or a dummy data packet (DP) in response to reception of the polling.

12. A polling arrangement according to claim 11, wherein said arrangement is adapted to perform polling according to the first type (T1) on a first logical channel, and to perform polling according to the complementary second type (T2) on a second logical channel.

13. A polling arrangement according to claim 11 or 12, wherein the arrangement (40) is adapted to transmit polling information to said user equipment (30), said information enabling the user equipment (30) to identify the polling type of the received polling.

14. A polling arrangement according to claim 13, wherein the polling information is based on a current radio traffic situation in the communication system (10).

15. A base station system (20) in a packet-based data communications system (10), said base station system being adapted to polling connected user equipment (30), **characterized in that** said base station system comprises
- first means (44) adapted for polling according to a first type (T1), said first polling type (T1) allowing said user equipment (30) to choose whether or not to transmit a user data packet (UP) to the base station system (20) in response to reception of polling of the first type (T1)and
- complementary second means (46) adapted for polling according to a second type (T2), said second polling type (T2) requiring the user equipment (30) to transmit a user data packet (UP) or a dummy data packet (DP) to the base station system (20) in response to reception of polling of the second type (T2).

16. A base station system (20) according to claim 15, wherein said base station system (20) comprises third means (23) adapted for analyzing the current radio traffic situation in the communications system (10) and for determining which type of polling to transmit.

17. A base station system (20) according to claim 15 or 16, wherein said base station system (20) is adapted to perform polling according to the first type (T1) on a first logical channel, and to perform polling according to the complementary second type (T2) on a second logical channel.

18. A base station system (20) according to any of claims 15-17, wherein the base station system (20) is adapted to transmit polling information to said user equipment (30), said information enabling the user equipment (30) to identify the polling type of the received polling.

19. A base station system (20) according to claim 18, wherein said polling information is based on a current radio traffic situation in the communication system (10).

20. A base station system (20) according to any of claims 15-19, wherein the communications system (10) is selected from at least one of:
a General Packet Radio Service (GPRS) communication system,
an Enhanced GPRS (EGPRS) communication system,
a GPRS/Enhanced Data rates for GSM (Global System for Mobile communications) Evolution (EDGE) communications system,
a Wideband Code Division Multiple Access (W-CDMA) communications system,
a CDMA2000 communications system,
a Wireless Local Area Network (W-LAN) communications system.

21. A user equipment (30) in a packet-based data communications system (10), said user equipment (30) being adapted to receive polling from a base station system (20) in said communications system (10), **characterized in that** the user equipment (30) comprises:
first means (34) for receiving and responding to polling of a first type (T1), said first means being adapted for optional transmission of a user data packet (UP) to the base station system (20) in response to said polling of a first type, and
complementary second means (36) for receiving and responding to polling of a second type (T2), said second means being adapted to mandatory transmit the user data packet (UP) or a dummy data packet (DP) to the base station system (20) in response to said polling of a second type.

22. A user equipment according to claim 21, wherein said equipment (30) further comprises third means (31) for identifying the polling type.

23. A user equipment (30) according to claim 21, wherein said equipment (30) further comprises:
- a buffer unit (33) for storing user data packets (UP) awaiting transmission.

24. A user equipment (30) according to claim 23, wherein said first means (34) and said second means (36) are adapted to check if there are any user data packets (UP) in the buffer (33) in response to polling from the base station system (20).

25. A user equipment (30) according to any of claims 21-24, wherein
said first means (34) are further adapted to receive polling according to said first type (T1) on a first logical channel, and
said second means (36) are further adapted to receive polling according to said second type (T2) on a second logical channel.

## Patentansprüche

1. Abfrageverfahren in einem paketbasierten Datenkommunikationssystem (10), das Kommunikationssystem (10) ein Basisstationssystem (20) umfassend, das angeschlossene Benutzerausrüstung (30) abfragt, **dadurch gekennzeichnet, dass** das Abfragen ausgeführt wird gemäß:
einer ersten Art der Abfrage (T1), die der Benutzerausrüstung (30) zu wählen gestattet, ein Benutzerdatenpaket (UP) an das Basisstationssystem (20) als Reaktion auf den Empfang einer Abfrage der ersten Art (T1) zu übertragen oder nicht zu übertragen, und
einer komplementären zweiten Art der Abfrage (T2), die erfordert, dass die Benutzerausrüstung (30) ein Benutzerdatenpaket (UP) oder ein Dummy-Datenpaket (DP) an das Basisstationssystem (20) als Reaktion auf den Empfang einer Abfrage der zweiten Art (T2) überträgt.

2. Verfahren nach Anspruch 1, wobei das Basisstationssystem (20) eine Abfrage gemäß der ersten Art (T1) in einem ersten logischen Kanal durchführt und eine Abfrage gemäß der komplementären zweiten Art (T2) in einem zweiten logischen Kanal durchführt.

3. Verfahren nach Anspruch 1 oder 2, wobei das Basisstationssystem (20) Abfrageinformationen an die Benutzerausrüstung (30) überträgt, wobei die Informationen die Benutzerausrüstung (30) in die Lage versetzen, die Abfrageart der empfangenen Abfrage zu identifizieren.

4. Verfahren nach Anspruch 3, wobei die Abfrageinformationen von dem Basisstationssystem (20) auf einer gegenwärtigen Funkverkehrssituation in dem Kommunikationssystem (10) beruhen.

5. Verfahren nach einem der vorstehenden Ansprüche, wobei die erste Art (T1) das Abfragen mit einem Upstate-Flag umfasst und die zweite Art (T2) das Abfragen mit einem Steuerblock umfasst.

6. Verfahren nach einem der vorstehenden Ansprüche, wobei das Kommunikationssystem (10) ausgewählt wird aus mindestens einem von:
einem Kommunikationssystem des allgemeinen paketvermittelten Funkdienstes (GPRS),
einem Kommunikationssystem des erweiterten GPRS (EGPRS),
einem Kommunikationssystem des GPRS/erweiterte Datenraten für GSM-(globales System für Mobilkommunikation)-Evolution (EDGE),
einem Breitband-Codemultiplexzugriff (W-CDMA)-Kommunikationssystem,
einem CDMA2000-Kommunikationssystem,
einem Drahtlos-Lokalnetz-(W-LAN)-Kommunikationssystem.

7. Verfahren nach einem der vorstehenden Ansprüche, wobei die Benutzerausrüstung (30) als Reaktion auf den Empfang der Abfrage der zweiten Art (T2) ein Benutzerdatenpaket (UP) an das Basisstationssystem (10) überträgt, wenn das Benutzerdatenpaket (UP) in der Benutzerausrüstung (30) für eine Übertragung verfügbar ist, anderenfalls überträgt die Benutzerausrüstung (30) das Dummy-Datenpaket (DP).

8. Verfahren nach einem der vorstehenden Ansprüche, wobei das Benutzerdatenpaket (UP) Benutzer-Nutzdaten umfasst und das Dummy-Datenpaket (DP) Daten umfasst, die das Basisstationssystem (20) in die Lage versetzen, die Benutzerausrüstung (30) zu identifizieren.

9. Verfahren nach einem der vorstehenden Ansprüche, wobei die Benutzerausrüstung (30) als Reaktion auf den Empfang der Abfrage der ersten Art (T1) ein Benutzerdatenpaket (UP) an das Basisstationssystem (10) senden soll, wenn das Benutzerdatenpaket (UP) für eine Übertragung in der Benutzerausrüstung (30) verfügbar ist.

10. Verfahren nach einem der vorstehenden Ansprüche, wobei die Benutzerausrüstung (30) als Reaktion auf den Empfang der Abfrage der ersten Art (T1) kein Datenpaket, weder ein Benutzerdatenpaket (UP) noch ein Dummy-Datenpaket (DP), an das Basisstationssystem (20) senden soll, wenn das Benutzerdatenpaket (UP) nicht für eine Übertragung in der Benutzerausrüstung (30) verfügbar ist.

11. Abfrageanordnung (40) in einem Basisstationssystem (20) eines paketbasierten Kommunikationssystems (10), wobei die Abfrageanordnung (40) zur Abfrage von Benutzerausrüstung (30) angepasst ist, **dadurch gekennzeichnet, dass** die Anordnung umfasst:
erste Mittel (44) zur Abfrage gemäß einer ersten Art (T1), die der Benutzerausrüstung (30) zu wählen gestatten, ein Benutzerdatenpaket (UP) als Reaktion auf den Empfang der Abfrage zu übertragen oder nicht zu übertragen, und
komplementäre zweite Mittel (46) zur Abfrage gemäß einer zweiten Art (T2), die erfordern, dass die Benutzerausrüstung (30) das Benutzerdatenpaket (UP) oder ein Dummy-Datenpaket (DP) als Reaktion auf den Empfang einer Abfrage überträgt.

12. Abfrageanordnung nach Anspruch 11, wobei die Anordnung angepasst ist, um eine Abfrage gemäß der ersten Art (T1) in einem ersten logischen Kanal durchzuführen und Abfrage gemäß der komplementären zweiten Art (T2) in einem zweiten logischen Kanal durchzuführen.

13. Abfrageanordnung nach Anspruch 11 oder 12, wobei die Anordnung (40) angepasst ist, um Abfrageinformationen an die Benutzerausrüstung (30) zu übertragen, wobei die Informationen die Benutzerausrüstung (30) in die Lage versetzen, die Abfrageart der empfangenen Abfrage zu identifizieren.

14. Abfrageanordnung nach Anspruch 13, wobei die Abfrageinformationen auf einer gegenwärtigen Funkverkehrssituation in dem Kommunikationssystem (10) beruhen.

15. Basisstationssystem (20) in einem paketbasierten Datenkommunikationssystem (10), wobei das Basisstationssystem zur Abfrage angeschlossener Benutzerausrüstung (30) angepasst ist, **dadurch gekennzeichnet, dass** das Basisstationssystem Folgendes umfasst
- erste Mittel (44), die zur Abfrage gemäß einer ersten Art (T1) angepasst sind, wobei die erste Abfrageart (T1) der Benutzerausrüstung (30) zu wählen gestattet, ein Benutzerdatenpaket (UP) als Reaktion auf den Empfang der Abfrage der ersten Art (T1) an das Basisstationssystem (20) zu übertragen oder nicht zu übertragen, und
- komplementäre zweite Mittel (46), die zur Abfrage gemäß einer zweiten Art (T2), angepasst sind, wobei die zweite Abfrageart (T2) erfordert, dass die Benutzerausrüstung (30) ein Benutzerdatenpaket (UP) oder ein Dummy-Datenpaket (DP) als Reaktion auf den Empfang einer Abfrage der zweiten Art (T2) an das Basisstationssystem (20) überträgt.

16. Basisstationssystem (20) nach Anspruch 15, wobei das Basisstationssystem (20) dritte Mittel (23) umfasst, die für die Analyse der gegenwärtigen Funkverkehrssituation in dem Kommunikationssystem (10) und für die Bestimmung, welche Art der Abfrage zu übertragen ist, angepasst sind.

17. Basisstationssystem (20) nach Anspruch 15 oder 16, wobei das Basisstationssystem (20) angepasst ist, um eine Abfrage gemäß der ersten Art (T1) in einem ersten logischen Kanal durchzuführen und eine Abfrage gemäß der komplementären zweiten Art (T2) in einem zweiten logischen Kanal durchzuführen.

18. Basisstationssystem (20) nach einem der Ansprüche 15-17, wobei das Basisstationssystem (20) angepasst ist, um Abfrageinformationen an die Benutzerausrüstung (30) zu übertragen, wobei die Informationen die Benutzerausrüstung (30) in die Lage versetzen, die Abfrageart der empfangenen Abfrage zu identifizieren.

19. Basisstationssystem (20) nach Anspruch 18, wobei die Abfrageinformationen auf einer gegenwärtigen Funkverkehrssituation in dem Kommunikationssystem (10) beruhen.

20. Basisstationssystem (20) nach einem der Ansprüche 15-19, wobei das Kommunikationssystem (10) ausgewählt wird aus mindestens einem von:
einem Kommunikationssystem des allgemeinen paketvermittelten Funkdienstes (GPRS),
einem Kommunikationssystem des erweiterten GPRS (EGPRS),
einem Kommunikationssystem des GPRS/erweiterte Datenraten für GSM-(globales System für Mobilkommunikation)-Evolution (EDGE),
einem Breitband-Codemultiplexzugriff (W-CDMA)-Kommunikationssystem,
einem CDMA2000-Kommunikationssystem,
einem Drahtlos-Lokalnetz-(W-LAN)-Kommunikationssystem.

21. Benutzerausrüstung (30) in einem paketbasierten Datenkommunikationssystem (10), wobei die Benutzerausrüstung (30) angepasst ist, um eine Abfrage von einem Basisstationssystem (20) in dem Kommunikationssystem (10) zu empfangen, **dadurch gekennzeichnet, dass** die Benutzerausrüstung (30) umfasst:
erste Mittel (34) zum Empfangen von und Reagieren auf Abfrage einer ersten Art (T1), wobei die ersten Mittel für eine optionale Übertragung eines Benutzerdatenpakets (UP) an das Basisstationssystem (20) als Reaktion auf die Abfrage einer ersten Art angepasst sind, und
komplementäre zweite Mittel (36) zum Empfangen von und Reagieren auf Abfrage einer zweiten Art (T2), wobei die zweiten Mittel angepasst sind, um das Benutzerdatenpaket (UP) oder ein Dummy-Datenpaket (DP) als Reaktion auf die Abfrage einer zweiten Art an das Basisstationssystem (20) zwingend zu übertragen.

22. Benutzerausrüstung nach Anspruch 21, wobei die Ausrüstung (30) weiterhin dritte Mittel (31) zum Identifizieren der Abfrageart umfasst.

23. Benutzerausrüstung (30) nach Anspruch 21, wobei die Ausrüstung (30) weiter umfasst:
- eine Puffereinheit (33) zum Speichern von Datenpaketen (UP), die auf eine Übertragung warten.

24. Benutzerausrüstung (30) nach Anspruch 23, wobei die ersten Mittel (34) und die zweiten Mittel (36) angepasst sind, um als Reaktion auf die Abfrage von dem Basisstationssystem (20) zu prüfen, ob Benutzerdatenpakete (UP) in dem Puffer (33) vorhanden sind.

25. Benutzerausrüstung (30) nach einem der Ansprüche 21-24, wobei
die ersten Mittel (34) weiterhin angepasst sind, um Abfrage gemäß der ersten Art (T1) in einem ersten logischen Kanal zu empfangen, und
die zweiten Mittel (36) weiterhin angepasst sind, um Abfrage gemäß der zweiten Art (T2) in einem zweiten logischen Kanal zu empfangen.

## Revendications

1. Procédé d'invitation à émettre dans un système de communication de données à base de paquets (10), ledit système de communication (10) comportant un système de station de base (20) invitant à émettre un équipement utilisateur connecté (30), **caractérisé en ce que** ladite invitation à émettre est mise en oeuvre selon :
un premier type d'invitation à émettre (T1) permettant audit équipement utilisateur (30) de décider ou non de transmettre un paquet de données d'utilisateur (UP) au système de station de base (20) en réponse à la réception d'une invitation à émettre du premier type (T1), et
un second type complémentaire d'invitation à émettre (T2), exigeant de l'équipement utilisateur (30) qu'il transmette un paquet de données d'utilisateur (UP) ou un paquet de données fictif (DP) au système de station de base (20) en réponse à la réception d'une invitation à émettre du second type (T2).

2. Procédé selon la revendication 1, dans lequel ledit système de station de base (20) met en oeuvre une invitation à émettre selon le premier type (T1) sur un premier canal logique, et met en oeuvre une invitation à émettre selon le second type complémentaire (T2) sur un second canal logique.

3. Procédé selon la revendication 1 ou 2, dans lequel le système de station de base (20) transmet des informations d'invitation à émettre audit équipement utilisateur (30), lesdites informations permettant à l'équipement utilisateur (30) d'identifier le type d'invitation à émettre de l'invitation à émettre reçue.

4. Procédé selon la revendication 3, dans lequel lesdites informations d'invitation à émettre du système de station de base (20) sont basées sur un état du trafic radio en cours dans le système de communication (10).

5. Procédé selon l'une quelconque des revendications précédentes, dans lequel ledit premier type (T1) comporte une invitation à émettre avec un fanion d'état haut et ledit second type (T2) comporte une invitation à émettre avec un bloc de commande.

6. Procédé selon l'une quelconque des revendications précédentes, dans lequel le système de communication (10) est sélectionné à partir d'au moins l'un des systèmes ci-dessous :
un système de communication de service général de radiocommunication par paquets (GPRS),
un système de communication de service général de radiocommunication par paquets amélioré (EGPRS),
un système de communication de débits binaires améliorés pour les GSM de demain (EDGE)/service général de radiocommunication par paquets (GPRS),
un système de communication d'accès multiple par répartition en code à large bande (W-CDMA),
un système de communication CDMA2000,
un système de communication de réseau local sans fil (W-LAN).

7. Procédé selon l'une quelconque des revendications précédentes, dans lequel ledit équipement utilisateur (30), en réponse à la réception de ladite invitation à émettre du second type (T2), transmet un paquet de données d'utilisateur (UP) au système de station de base (10), lorsque ledit paquet de données d'utilisateur (UP) est disponible pour une transmission dans l'équipement utilisateur (30), sinon l'équipement utilisateur (30) transmet le paquet de données fictif (DP).

8. Procédé selon l'une quelconque des revendications précédentes, dans lequel ledit paquet de données d'utilisateur (UP) comporte des données utiles d'utilisateur et dans lequel ledit paquet de données fictif (DP) comporte des données permettant au système de station de base (20) d'identifier l'équipement utilisateur (30).

9. Procédé selon l'une quelconque des revendications précédentes, dans lequel ledit équipement utilisateur (30), en réponse à la réception de ladite invitation à émettre du premier type (T1), doit envoyer un paquet de données d'utilisateur (UP) au système de station de base (10) lorsque ledit paquet de données d'utilisateur (UP) est disponible pour une transmission dans l'équipement utilisateur (30).

10. Procédé selon l'une quelconque des revendications précédentes, dans lequel ledit équipement utilisateur (30), en réponse à la réception de ladite invitation à émettre du premier type (T1), ne doit transmettre aucun paquet de données, aucun paquet de données d'utilisateur (UP), et aucun paquet de données fictif (DP) au système de station de base (20) lorsque ledit paquet de données d'utilisateur (UP) n'est pas disponible pour une transmission dans l'équipement utilisateur (30).

11. Agencement d'invitation à émettre (40) dans un système de station de base (20) d'un système de communication à base de paquets (10), ledit agencement d'invitation à émettre (40) étant adapté à l'invitation à émettre d'équipement utilisateur (30), **caractérisé en ce que** ledit agencement comporte :
un premier moyen (44) pour mettre en oeuvre une invitation à émettre selon un premier type (T1), permettant à l'équipement utilisateur (30) de décider ou non de transmettre un paquet de données d'utilisateur (UP) en réponse à la réception de l'invitation à émettre, et
un deuxième moyen complémentaire (46) pour mettre en oeuvre une invitation à émettre selon un second type (T2), exigeant de l'équipement utilisateur (30) qu'il transmette le paquet de données d'utilisateur (UP) ou un paquet de données fictif (DP) en réponse à la réception de l'invitation à émettre.

12. Agencement d'invitation à émettre selon la revendication 11, dans lequel ledit agencement est apte à mettre en oeuvre une invitation à émettre selon le premier type (T1) sur un premier canal logique, et à mettre en oeuvre une invitation à émettre selon le second type complémentaire (T2) sur un second canal logique.

13. Agencement d'invitation à émettre selon la revendication 11 ou 12, dans lequel l'agencement (40) est apte à transmettre des informations d'invitation à émettre audit équipement utilisateur (30), lesdites informations permettant à l'équipement utilisateur (30) d'identifier le type d'invitation à émettre de l'invitation à émettre reçue.

14. Agencement d'invitation à émettre selon la revendication 13, dans lequel les informations d'invitation à émettre sont basées sur un état du trafic radio en cours dans le système de communication (10).

15. Système de station de base (20) dans un système de communication de données à base de paquets (10), ledit système de station de base étant apte à inviter à émettre un équipement utilisateur connecté (30), **caractérisé en ce que** ledit système de station de base comporte :
- un premier moyen (44) apte à mettre en oeuvre une invitation à émettre selon un premier type (T1), ledit premier type d'invitation à émettre (T1) permettant audit équipement utilisateur (30) de décider ou non de transmettre un paquet de données d'utilisateur (UP) au système de station de base (20), en réponse à la réception d'une invitation à émettre du premier type (T1) et
- un deuxième moyen complémentaire (46) apte à mettre en oeuvre une invitation à émettre selon un second type (T2), ledit second type d'invitation à émettre (T2) exigeant de l'équipement utilisateur (30) qu'il transmette un paquet de données d'utilisateur (UP) ou un paquet de données fictif (DP) au système de station de base (20), en réponse à la réception d'une invitation à émettre du second type (T2).

16. Système de station de base (20) selon la revendication 15, dans lequel ledit système de station de base (20) comporte un troisième moyen (23) apte à analyser l'état du trafic radio en cours dans le système de communication (10) et apte à déterminer quel type d'invitation à émettre il convient de transmettre.

17. Système de station de base (20) selon la revendication 15 ou 16, dans lequel ledit système de station de base (20) est apte à mettre en oeuvre une invitation à émettre selon le premier type (T1) sur un premier canal logique, et à mettre en oeuvre une invitation à émettre selon le second type complémentaire (T2) sur un second canal logique.

18. Système de station de base (20) selon l'une quelconque des revendications 15 à 17, dans lequel le système de station de base (20) est apte à transmettre des informations d'invitation à émettre audit équipement utilisateur (30), lesdites informations permettant à l'équipement utilisateur (30) d'identifier le type d'invitation à émettre de l'invitation à émettre reçue.

19. Système de station de base (20) selon la revendication 18, dans lequel lesdites informations d'invitation à émettre sont basées sur un état du trafic radio en cours dans le système de communication (10).

20. Système de station de base (20) selon l'une quelconque des revendications 15 à 19, dans lequel le système de communication (10) est sélectionné à partir d'au moins l'un des systèmes ci-dessous :
un système de communication de service général de radiocommunication par paquets (GPRS),
un système de communication de service général de radiocommunication par paquets amélioré (EGPRS),
un système de communication de débits binaires améliorés pour les GSM de demain (EDGE)/service général de radiocommunication par paquets (GPRS),
un système de communication d'accès multiple par répartition en code à large bande (W-CDMA),
un système de communication CDMA2000,
un système de communication de réseau local sans fil (W-LAN).

21. Équipement utilisateur (30) dans un système de communication de données à base de paquets (10), ledit équipement utilisateur (30) étant apte à recevoir une invitation à émettre d'un système de station de base (20) dans ledit système de communication (10), **caractérisé en ce que** l'équipement utilisateur (30) comporte :
un premier moyen (34) pour recevoir et répondre à une invitation à émettre d'un premier type (T1), ledit premier moyen étant apte à une transmission facultative d'un paquet de données d'utilisateur (UP) au système de station de base (20) en réponse à ladite invitation à émettre d'un premier type, et
un deuxième moyen complémentaire (36) pour recevoir et répondre à une invitation à émettre d'un second type (T2), ledit deuxième moyen étant apte à transmettre de manière obligatoire le paquet de données d'utilisateur (UP) ou un paquet de données fictif (DP) au système de station de base (20) en réponse à ladite invitation à émettre d'un second type.

22. Équipement utilisateur selon la revendication 21, dans lequel ledit équipement (30) comporte en outre un troisième moyen (31) pour identifier le type d'invitation à émettre.

23. Équipement utilisateur (30) selon la revendication 21, dans lequel ledit équipement (30) comporte en outre :
- une unité de mémoire tampon (33) destinée à stocker des paquets de données d'utilisateur (UP) en attente de transmission.

24. Équipement utilisateur (30) selon la revendication 23, dans lequel ledit premier moyen (34) et ledit deuxième moyen (36) sont aptes à vérifier s'il existe de quelconques paquets de données d'utilisateur (UP) dans la mémoire tampon (33) en réponse à une invitation à émettre du système de station de base (20).

25. Équipement utilisateur (30) selon l'une quelconque des revendications 21 à 24, dans lequel
ledit premier moyen (34) est en outre apte à recevoir une invitation à émettre selon ledit premier type (T1) sur un premier canal logique, et
ledit deuxième moyen (36) est en outre apte à recevoir une invitation à émettre selon ledit second type (T2) sur un second canal logique.
